# EUROPÄISCHE PATENTSCHRIFT

(11) **EP 1 040 794 B1**
(45) Veröffentlichungstag und Bekanntmachung des Hinweises auf die Patenterteilung: **30.01.2002**
(21) Anmeldenummer: 00105125.9
(22) Anmeldetag: 10.03.2000
(51) Int. Cl.: A61C 13/265

(54) **T-Geschiebe**
T-shaped sliding attachment
Attache à glissière en forme de T

(30) Priorität: 01.04.1999 DE 19915109
(43) Veröffentlichungstag der Anmeldung: 04.10.2000
(73) Patentinhaber: Rübeling, Günter, 27580 Bremerhaven (DE)
(72) Erfinder: Rübeling, Günter, 27580 Bremerhaven (DE)
(74) Vertreter: Eisenführ, Speiser & Partner

(56) Entgegenhaltungen:
- EP-A- 0 238 733
- EP-A- 0 239 821
- EP-A- 0 560 183
- DE-C- 19 649 969
- DE-C- 19 729 704
- FR-A- 1 493 268

## Beschreibung

Die Erfindung betrifft ein T-Geschiebe zur lösbaren Befestigung von Zahnersatzteilen aneinander oder am Restgebiß, mit einer Matrize, die eine Aussparung aufweist, einer Patrize, die einen mit einer Aussparung in der Matrize in Eingriff bringbaren Befestigungsabschnitt und einen durchgehenden Schlitz aufweist, der sich zumindest durch den Befestigungsabschnitt erstreckt und diesen in zwei Teile teilt, und einer Spreizeinrichtung, die die beiden Befestigungsabschnittsteile spreizt und ein im Schlitz angeordnetes und sich mit beiden Befestigungsabschnittsteilen in Eingriff befindliches erstes Spreizmittel aufweist, das als axial bewegbar gelagerter erster Konus ausgebildet ist, wobei der Schlitz einen aufgeweiteten und einen im wesentlichen dem ersten Konus entsprechenden konusförmigen Hohlraum bildenden ersten Abschnitt aufweist, in dem der erste Konus angeordnet ist.

Bei einem solchen T-Geschiebe dient die Spreizeinrichtung dazu, durch Spreizung der beiden durch den Schlitz voneinander getrennten Befestigungsabschnittsteile der Patrize einen Reibschluß zwischen der Patrize und der Matrize herzustellen, wodurch die Patrize an der Matrize fixiert wird.

Ein solches T-Geschiebe ist aus der EP 0 239 821 A1 bekannt, bei welcher das Spreizmittel von einer Schraube mit einem in deren Schaftbereich angeordneten Konus gebildet wird, welche parallel zum Schlitzgrund und somit in Längsrichtung des Schlitzes in diesen einführbar ist, so daß sich bei eingedrehter Schraube der Konus im mittleren Bereich des Schlitzes befindet.

Als nachteilig hat sich bei der bekannten Anordnung herausgestellt, daß die Spreizung der durch den Schlitz voneinander getrennten und beabstandeten Befestigungsabschnittsteile über die Länge des Schlitzes und somit über die Länge des Befestigungsabschnittes nicht parallel ist. Dies führt zu einer über die Länge des Befestigungsabschnittes ungleichmäßig verteilten Friktionskraft. Mitzunehmender Entfernung vom Spreizmittel nimmt nämlich die Klemmkraft spürbar ab, was sich nachteilig auf die Klemmeigenschaften des Befestigungsabschnittes und somit auf die Zuverlässigkeit der Halterung der Patrize an der Matrize auswirkt.

Es ist daher Aufgabe der vorliegenden Erfindung, bei einem T-Geschiebe der eingangs genannten Art die Zuverlässigkeit der Klemmhalterung mit einer einfach herzustellenden und zu bedienenden Konstruktion zu erhöhen.

Diese Aufgabe wird bei einem T-Geschiebe der eingangs genannten Art dadurch gelöst, daß die Spreizeinrichtung zusätzlich zum ersten Spreizmittel mindestens ein im Abstand zum ersten Spreizmittel im Schlitz angeordnetes zweites Spreizmittel aufweist, in dem der zweite Konus angeordnet ist.

Durch die erfindungsgemäße zusätzliche Anordnung mindestens eines weiteren konusförmigen Spreizmittels läßt sich eine im wesentlichen parallele Spreizung und somit eine gegenüber dem Stand der Technik deutlich gleichmäßigere Verteilung der Friktionskraft über die Länge des Befestigungsabschnittes realisieren, so daß gerade auch an den Enden des Schlitzes die Friktionskraft nicht wesentlich geringer als in der Mitte des Schlitzes, sondern etwa gleich groß ist. Dabei macht sich die Erfindung die Erkenntnis zunutze, daß die vom Schlitz voneinander getrennten Befestigungsabschnittsteile zwar elastisch sein müssen, um gespreizt werden zu können, diese Elastizität jedoch wiederum auch zu einer unerwünschten Nachgiebigkeit der Befestigungsabschnittsteile führt, die um so höher wird, je größer der Abstand zum Spreizmittel ist und gerade dieser Effekt für die unerwünschte Reduzierung der Friktionskraft verantwortlich ist. Die zur Reduzierung der Friktionskraft führende Nachgiebigkeit wird nun erfindungsgemäß durch die Anordnung mindestens eines weiteren konusförmigen Spreizmittels verringert, ohne daß dadurch die Elastizität der Befestigungsabschnittsteile verlorengeht, die ja für die Spreizung der Befestigungsabschnittsteile und somit für die Erzeugung der gewünschten Friktionskraft notwendig ist. Mit Hilfe der Erfindung wird also eine Friktionskraft erzeugt, die über die gesamte Länge des Schlitzes bzw. des Befestigungsabschnittes der Patrize im wesentlichen die gleiche gewünschte Stärke besitzt, wodurch eine gegenüber dem Stand der Technik effektivere und zuverlässigere Klemmhalterung realisiert wird.

Durch Verwendung von axial bewegbar gelagerten Konen als Spreizmittel und Ausbildung des Schlitzes mit aufgeweiteten und jeweils einen im wesentlichen den Konen entsprechenden konusförmigen Hohlraum bildenden Abschnitten zur Aufnahme der Konen läßt sich in besonders einfacher Weise die gewünschte Spreizung der Befestigungsabschnittsteile realisieren, da bei axialer Bewegung der Konen in Richtung ihres gespreizten bzw. schmalen Endes diese in Anlage an die entsprechenen Innenflächenabschnitte des Schlitzes gelangen und bei fortgesetzter Bewegung als Keile wirken und den Schlitz aufweiten.

Die EP 0 238 733 A1 offenbart ebenfalls einen Spreizmechanismus zur Befestigung einer Zahnprothese mit einer Schraube mit konisch geformtem Kopf und mit einem zweiten Konus mit Innengewinde zur Aufnahme des Gewindeschaftes der Schraube. Dieser bekannte Spreizmechanismus dient zur Befestigung eines Verankerungselementes an einer Patrize, der zweite Konus ist an der Unterseite des Verankerungsselementes als Vorsprung einstückig angeformt und außerdem ist eine geschlitze Hülse mit konusförmig aufgeweiteten Enden zur Aufnahme der Schraube mit ihrem konisch geformten Kopf an der einen Seite und des den Vorsprung am Verankerungselment bildenden zweiten Konus an der anderen Seite vorgesehen. Der Mantel der Hülse ist zylindrisch geformt und in der Patrize in einer entsprechend zylindrisch geformten Durchgangsbohrung angeordnet, welche im übrigen nicht zur Befestigung der Patrize in einer Matrize oder einer Zahnprothese, sondern ausschließlich zur Befestigung des Verankerungselementes an der Patrize dient. Der Innendurchmesser der zylindrischen Durchgangsbohrung und der Aussendurchmesser des zylindrischen Mantels der geschlitzen Hülse sind so dimensioniert, daß im entspannten Zustand der geschlitzten Hülse für den Zusammenbau ein Spiel zwischen der Hülse und der zylindrischen Durchgangsbohrung vorhanden ist, das erst durch Ausdehnung der geschlitzten Hülse verschwindet. Demgegenüber benötigt die Erfindung keine derartige Hülse, was erfindungsgemäß dadurch erreicht wird, daß nicht nur der eine Konus, sondern auch der andere Konus axial bewegbar gelagert ist und sich beide Konen direkt in Anlage an entsprechende konusförmige Innenflächenabschnitte des Schlitzes bringbar sind.

Da gerade die Enden der Befestigungsabschnittsteile besonders nachgiebig sind, sollte vorzugsweise der erste Konus am einen Ende des Schlitzes und der zweite Konus am anderen Ende des Schlitzes angeordnet sein.

Zweckmäßigerweise sollten die Konen in die Enden des Schlitzes einführbar sein.

Die Konen sollten dabei vorzugsweise entgegengesetzt zueinander gerichtet sein un die Spreizeinrichtung ein Kopplungsmittel aufweisen, das eine Bewegung der beiden Konen in entgegengesetzter Richtung zueinander bewirkt.

Vorzugsweise sollten die Konen mit ihren schmalen Enden in den Schlitz einführbar sein, wobei mindestens ein Ende des Schlitzes zu einem im wesentlichen einen Konus entsprechenden konusförmigen Hohlraum bildenden Abschnitt aufgeweitet sein sollte.

Eine besonders einfache und somit wirkungsvolle und zweckmäßige Konstruktion des Kopplungsmittels läßt sich dadurch realisieren, daß das Kopplungsmittel als Gewindebolzen ausgebildet ist, wobei sich durch Drehung des Gewindebolzens die gewünschte axiale Bewegung der Konen realisieren läßt. Der Gewindebolzen sollte einen Kopf aufweisen, der vom ersten Konus gebildet wird, und der zweite Konus sollte als auf den Gewindebolzen aufschraubbare Mutter vorgesehen sein, wodurch die beiden Konen mit ihren spitzen Enden aufeinanderzu gerichtet und somit auch entsprechend aufeinanderzu bewegbar angeordnet sind. Außerdem bildet diese Konstruktion eine besonders leicht zu handhabende Anordnung, da der Gewindebolzen mit seinem freien Ende in das eine Ende des Schlitzes gesteckt und am anderen Ende des Schlitzes die konusförmige Mutter angeordnet wird, mit der das freie Ende des Gewindebolzens in Schraubeingriff gelangt, wobei durch Eindrehen und Festziehen des Gewindebolzens die beiden Konen in Anlage an die entsprechenden Innenflächen des Schlitzes gelangen und diesen aufweiten, was zu der gewünschten parallelen Spreizung der Befestigungsabschnittsteile und somit zur Erzeugung einer über die Länge im wesentlichen gleichmäßigen Friktion des Befestigungsabschnittes der Patrize in der Aussparung der Matrize führt. Alternativ können natürlich auch beispielsweise beide Konen als auf den Gewindebolzen aufschraubbare Muttern vorgesehen sein.

Schließlich sollte der Schlitz im Befestigungsabschnitt der Patrize so tief ausgebildet sein, daß er nicht nur den in die Aussparung der Matrize einsetzbaren Befestigungsabschnitt der Patrize in zwei Teile teilt, sondern auch einen sich an den Befestigungsabschnitt anschließenden Bereich der Patrize. In diesem Bereich der Patrize und somit außerhalb des Befestigungsabschnittes sollten vorzugsweise die Spreizmittel im Schlitz angeordnet werden. Somit sind die Befestigungsabschnittsteile nicht so starr und ermöglichen ein besseres Einführen der Patrize mit dem Befestigungsabschnitt in die Aussparung der Matrize, wodurch ein möglicher vorzeitiger Verschleiß reduziert und eine optimale Passung und Friktion gewährleistet wird.

Gewöhnlich wird an der Patrize ein Verankerungselement befestigt. Vorzugsweise kann an der Patrize ein Längssteg ausgebildet sein, auf den das Verankerungselement aufgeschoben wird. Hierzu sollte das Verankerungselement eine entsprechende Aussparung aufweisen, in die der Längssteg eingreift. Im Längssteg kann vorzugsweise ein Schlitz ausgebildet sein, der zweckmäßigerweise in Längsrichtung des Längssteges verläuft, wodurch eine elastische Zunge gebildet wird. Zweckmäßigerweise ist diese elastische Zunge als Arretierungsmittel vorgesehen, die in Rasteingriff mit dem Verankerungselement bringbar ist. Hierzu kann die elastische Zunge mit einer Vertiefung versehen sein, in die ein in der Aussparung im Verankerungselement angeordneter Rastvorsprung einrastet. Anstelle des Rastvorsprunges kann auch ein Stift verwendet werden, der durch eine entsprechende Bohrung im Verankerungselement eingesetzt ist und in abschnittsweise Anlage an die Vertiefung gebracht wird, so daß diese einen Abschnitt des Umfanges des Stiftes umschließt. Zur Fixierung der elastischen Zunge nach Aufsetzen des Verankerungselementes könnte ferner noch eine Schraube verwendet werden, die in den Längssteg der Patrize eingesetzt wird, wobei vorzugsweise die hierzu erforderliche Innengewindebohrung von der Zunge begrenzt werden sollte, und zwar entweder entlang des Umfanges oder stirnseitig. An dieser Stelle sei der Vollständigkeit halber erwähnt, daß die zuvor beschriebene Rasthalterung eines Verankerungselementes an der Patrize einen eigenständigen Erfindungsaspekt bildet.

Nachfolgend wird ein bevorzugtes Ausführungsbeispiel der Erfindung anhand der beiliegenden Zeichnungen näher erläutert. Es zeigen:
- Figur 1: die Stirnseite eines T-Geschiebes mit Matrize, an der Matrize befestigter Patrize und an der Patrize gehaltertem Verankerungselement;
- Figur 2: eine teilweise geschnittene Seitenansicht der Patrize des T-Geschiebes von Figur 1 mit in der Patrize eingesetzter Spreizschraube und Spreizmutter sowie an der Patrize gehaltertem Verankerungselement; und
- Figur 3: die Patrize von Figur 2 in derselben Seitenansicht, wobei jedoch die Spreizschraube und die Spreizmutter sowie das Verankerungselement weggelassen sind.

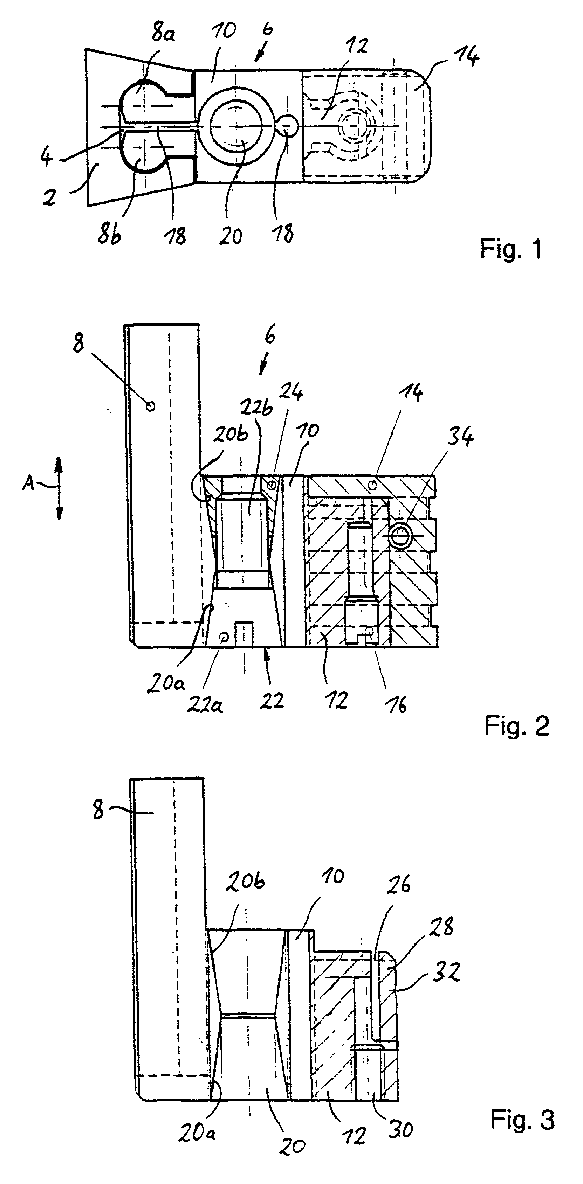

Das in den Figuren dargestellte T-Geschiebe besteht aus einer Matrize 2, die eine längliche Nut 4 aufweist, wie Figur 1 zeigt, sowie aus einer Patrize 6, die einen ersten Längssteg 8 aufweist, der zur Befestigung der Patrize 6 an der Matrize 2 in deren Nut 4 angeordnet wird, wie Figur 1 erkennen läßt. Hierzu stimmen die Nut 4 der Matrize 2 und der erste Längssteg 8 der Patrize 6 in ihren Querschnittsabmessungen im wesentlichen überein, wie Figur 1 ebenfalls zu entnehmen ist. Die Patrize 6 weist einen mittleren Abschnitt 10 auf, an dessen einer Längsseite der erwähnte erste Längssteg 8 und an dessen gegenüberliegender anderen Längsseite ein zweiter Längssteg 12 angeordnet ist. Der zweite Längssteg 12 dient zur Halterung eines Verankerungselementes 14, das außerdem noch mit einer Halteschraube 16 am zweiten Längssteg 12 der Patrize 6 fixierbar ist, wie Figur 2 zeigt.

In der Patrize 6 ist ein Schlitz 18 ausgebildet, der in Längsrichtung des ersten Längssteges 8 gemäß Pfeil A (Figur 2) verläuft, den ersten Längssteg 8 in zwei Hälften 8a und 8b unterteilt (Figur 1), die auch Lamellen genannt werden, und sich vom ersten Längssteg 8 aus in den mittleren Abschnitt 10 der Patrize 6 bis in die Nähe des zweiten Längssteges 12 erstreckt, so daß auch der mittlere Abschnitt 10 der Patrize 6 durch den Schlitz 18 im wesentlichen in zwei Hälften unterteilt wird. Aufgrund der Unterteilung durch den Schlitz 18 entstehen somit zwei voneinander getrennte Abschnitte, die zueinander elastisch angeordnet sind und bei deren Enden es sich um die den ersten Längssteg 8 gemeinsam bildenden Lamellen 8a und 8b handelt. Insbesondere wenn die Patrize 6 aus Metall hergestellt ist, läßt sich eine federnd elastische Lagerung der beiden Lamellen 8a und 8b besonders gut realisieren.

Der außerhalb des ersten Längssteges 8 und innerhalb des mittleren Abschnittes 10 der Patrize 6 befindliche Teil des Schlitzes 18 ist zu einer Bohrung 20 aufgeweitet, die sich somit in Längsrichtung durch den mittleren Abschnitt der Patrize 6 erstreckt. Wie die Figuren 2 und 3 erkennen lassen, besteht die Bohrung 20 im wesentlichen aus zwei konusförmigen Abschnitten 20a und 20b, die sich jeweils zu den Enden der Bohrung 20 und somit zu den Stirnseiten des mittleren Abschnittes 10 der Patrize 6 hin öffnen, so daß die Bohrung 20 die Form eines Doppelkegels (mit aufeinanderzu gerichteten Spitzen) besitzt. An dieser Stelle sei noch einmal darauf hingewiesen, daß die Bohrung 20 einen Abschnitt des Schlitzes 18 bildet und somit durch den (übrigen) Schlitz 18 entsprechend geteilt ist.

In die Bohrung 20 wird eine Spreizschraube 22 eingesetzt, deren Kopf 22a die Form eines Konus besitzt, der sich zum Gewindeschaft 22b der Schraube 22 hin verjüngt. Die Form des konusförmigen Schraubenkopfes 22a ist an die Form des ersten konusförmigen Abschnittes 20a der Bohrung 20 angepaßt, so daß bei eingedrehter Spreizschraube 22 deren konusförmiger Kopf 22a mit seiner Umfangsfläche im wesentlichen an der Innenfläche des ersten konusförmigen Abschnittes 20 der Bohrung 20 anliegt, wie in Figur 2 gezeigt ist. In den gegenüberliegenden zweiten konusförmigen Abschnitt 20b der Bohrung 20 ist eine konusförmige Spreizmutter 24 eingesetzt, die eine Bohrung mit Innengewinde aufweist, in welche die Spreizschraube 22 mit ihrem Gewindeschaft 22b eingeschraubt ist, wie Figur 2 ebenfalls erkennen läßt. In gleicher Weise wie der konusförmige Schraubenkopf 22a ist auch die konusförmige Spreizmutter 24 in ihrer Außenform dem zweiten konusförmigen Abschnitt 20b der Bohrung 20 angepaßt, so daß nach Einsetzen in die Bohrung 20 die Spreizmutter 24 mit ihrer Umfangsfläche im wesentlichen an der Innenfläche des zweiten konusförmigen Abschnittes 20b der Bohrung 20 anliegt. In Längsrichtung sind der konusförmige Schraubenkopf 22a und die konusförmige Spreizmutter 24 so bemessen, daß bei in die Bohrung 20 eingesetzter Spreizschraube 22 und Spreizmutter 24 weder der Schraubenkopf 22a noch die Spreizmutter 24 über die zugehörigen Stirnseiten des mittleren Abschnittes 10 der Patrize 6 hinausragen, wie Figur 2 erkennen läßt, und außerdem zwischen dem Schraubenkopf 22a und der Spreizmutter 24 noch ein Abstand verbleibt, so daß zum Spannen der Anordnung aus Spreizschraube 22 und Spreizmutter 24 die Spreizschraube 22 noch weiter in die Spreizmutter 24 gedreht werden kann. Ferner ist die Länge des Schraubenschaftes 22b der Spreizschraube 22 so gewählt, daß der Schraubenschaft 22b der Spreizschraube 22 sich nicht vollständig durch die Spreizmutter 24 hindurch erstreckt, sondern innerhalb dieser endet.

Bei Eindrehen der Spreizschraube 22 in die Spreizmutter 24 gelangen der konusförmige Schraubenkopf 22a und die konusförmige Spreizmutter 24 in Anlage an die konusförmigen Abschnitte 20a und 20b der Bohrung 20. Wird die Spreizschraube 22 dann weiter in die Spreizmutter 24 hineingedreht, bewegen sich der konusförmige Schraubenkopf 22a und die konusförmige Spreizmutter 24 entlang der Innenwandungen der konusförmigen Abschnitte 20a und 20b der Bohrung 20 aufeinanderzu, wodurch radialer Druck auf die durch den Schlitz 18 voneinander getrennten Hälften der Patrize 6 ausgeübt wird und diese auseinandergedrückt werden. Auf diese Weise werden die in der Nut 4 der Matrize 2 sitzenden Lamellen 8a und 8b gespreizt und in Anlage an die Innenwandung der Nut 4 gebracht. Dabei üben die gespreizten Lamellen 8a und 8b eine Friktionskraft auf die Innenwandung der Nut 4 aus, wodurch die Patrize 6 durch Klemmeingriff an der Matrize 2 befestigt wird.

Demnach dient die aus der Spreizschraube 22 und der Spreizmutter 24 gebildete Anordnung als Spreizeinrichtung, die zwei Spreizmittel aufweist, welche vom konusförmigen Schraubenkopf 22a und der konusförmigen Spreizmutter 24 gebildet werden. Da diese beiden Spreizmittel voneinander beabstandet sind und radialen Druck auf die beiden Hälften der Patrize 6 in zu den Stirnseiten des mittleren Abschnittes 10 der Patrize 6 benachbarten Abschnitten ausüben, wird eine parallele Spreizung der Lamellen 8a und 8b gewährleistet.

Durch die elastische Anordnung der beiden Hälften der Patrize 6 und insbesondere der beiden Lamellen 8a und 8b bewegen sich bei Zurückdrehen der Spreizschraube 22 die Lamellen 8a und 8b wieder aufeinanderzu und gelangen somit der konusförmige Schraubenkopf 22a und die konusförmige Spreizmutter 24 außer Eingriff von den konusförmigen Abschnitten 20a und 20b der Bohrung 20, wodurch der Klemmeingriff der Patrize 6 mit der Matrize 2 gelöst wird.

Da die Ausübung der radialen Friktionskraft zur Spreizung nicht im Bereich der Lamellen 8a und 8b, sondern im mittleren Abschnitt 10 der Patrize 6 stattfindet, sind die beiden Lamellen 8a und 8b grundsätzlich immer leicht federnd angeordnet. Demnach sind die Lamellen 8a und 8b nicht so starr und ermöglichen deshalb ein besseres Einführen in die Nut 4 der Matrize 2.

In Figur 3 ist der Aufbau des zweiten Längssteges 12 zur Halterung des Verankerungselementes 14 im einzelnen erkennbar. Im zweiten Längssteg 12 ist ein Längsschlitz 26 ausgebildet, der allerdings nicht durchgehend ist, sondern jenseits der Mitte des Längssteges 12 endet. Durch diesen Längsschlitz 26 wird am freien Ende des zweiten Längssteges 12 eine federnde Zunge 28 gebildet. Ferner ist für die Aufnahme der Halteschraube 16 (Figur 2) eine Bohrung 30 mit Innengewinde vorgesehen, die vom Längsschlitz 26 so unterbrochen wird, daß die Bohrung 30 von der federnden Zunge 28 begrenzt wird. An der Außenseite ist die Zunge 28 mit einer querlaufenden Nut 32 versehen.

Das Verankerungselement 14 weist einen in den Figuren nicht näher bezeichneten Hohlraum auf, der den zweiten Längssteg 12 zur Befestigung des Verankerungselementes 14 an der Patrize 6 aufnimmt, indem das Verankerungselement 14 über den zweiten Längssteg 12 geschoben wird. Dabei rastet ein quer in das Verankerungselement 14 gesteckter und sich durch dessen Hohlraum erstreckender Stift 34 in die Nut 32 an der federnden Zunge 28 ein, so daß der Stift 34 als Rastvorsprung dient. Selbstverständlich können auch andere Arten von Rastvorsprüngen oder Rastnasen vorgesehen und beispielsweise an der Innenwandung des Hohlraums des Verankerungselementes 14 angebracht sein. Das Einrasten des Stiftes 34 oder einer sonstigen Rastnase in die Nut 32 an der federnden Zunge 28 gibt dem Techniker mehr Sicherheit beim Befestigen des Verankerungselementes 14 an der Patrize 6.

Zusätzlich wird das Verankerungselement 14 von der Halteschraube 16 fixiert, deren Schaft außerdem an der federnden Zunge 28 anliegt, wie Figur 2 erkennen läßt, und somit ein ungewolltes Verbiegen der Zunge 28 und dadurch bedingtes Lösen des Verankerungselementes 14 verhindert.

Abschließend sei noch erwähnt, daß sich der erste Längssteg 8, der Schlitz 18, die Bohrung 20, die Spreizschraube 22, die Spreizmutter 24, der zweite Längssteg 12, die Halteschraube 16 und der Längsschlitz 26 parallel zueinander angeordnet sind und sich in Richtung des Pfeils A (Figur 2) erstrecken.

## Patentansprüche

1. T-Geschiebe zur lösbaren Befestigung von Zahnersatzteilen aneinander oder am Restgebiß, mit einer Matrize (2), die eine Aussparung (4) aufweist, einer Patrize (6), die einen mit einer Aussparung (4) in der Matrize (2) in Eingriff bringbaren Befestigungsabschnitt (8) und einen durchgehenden Schlitz (18) aufweist, der sich zumindest durch den Befestigungsabschnitt (8) erstreckt und diesen in zwei Teile (8a, 8b) teilt, und einer Spreizeinrichtung (22, 24), die die beiden Befestigungsabschnittsteile (8a, 8b) spreizt und ein im Schlitz (18) angeordnetes und sich mit beiden Befestigungsabschnittsteilen (8a, 8b) in Eingriff befindliches erstes Spreizmittel aufweist, das als axial bewegbar gelagerter erster Konus (22a) ausgebildet ist, wobei der Schlitz (18) einen aufgeweiteten und im wesentlichen dem ersten Konus (22a) entsprechenden konusförmigen Hohlraum bildenden ersten Abschnitt (20a) aufweist, in dem der erste Konus (22a) angeordnet ist,
**dadurch gekennzeichnet, daß** die Spreizeinrichtung (22, 24) mindestens ein im Abstand zum ersten Spreizmittel (22a) im Schlitz (18) angeordnetes zweites Spreizmittel aufweist, das als axial bewegbar gelagerter zweiter Konus (24) ausgebildet ist, und der Schlitz (18) einen aufgeweiteten und im wesentlichen dem zweiten Konus (24) entsprechenden konusförmigen Hohlraum bildenden zweiten Abschnitt (20b) aufweist, in dem der zweite Konus (24) angeordnet ist.

2. T-Geschiebe nach Anspruch 1,
**dadurch gekennzeichnet, daß** der erste Konus (22a) im einen Ende des Schlitzes (18) und der zweite Konus (24) im anderen Ende des Schlitzes (18) angeordnet ist.

3. T-Geschiebe nach Anspruch 1 oder 2,
**dadurch gekennzeichnet, daß** die Konen (22a, 24) in die Enden des Schlitzes (18) einführbar sind.

4. T-Geschiebe nach mindestens einem der Ansprüche 1 bis 3,
**dadurch gekennzeichnet, daß** die Konen (22a, 24) entgegengesetzt zueinander gerichtet sind und die Spreizeinrichtung (22, 24) ein Kopplungsmittel (22) aufweist, das eine Bewegung der beiden Konen (22a, 24) in entgegengesetzter Richtung zueinander bewirkt.

5. T-Geschiebe nach mindestens einem der Ansprüche 1 bis 4,
**dadurch gekennzeichnet, daß** die Konen (22a, 24) mit ihren schmalen Enden in den Schlitz (18) einführbar sind.

6. T-Geschiebe nach Anspruch 5,
**dadurch gekennzeichnet, daß** mindestens ein Ende des Schlitzes (18) zu einem im wesentlichen einem Konus (22a, 24) entsprechenden konusförmigen Hohlraum bildenden Abschnitt (20a, 20b) aufgeweitet ist.

7. T-Geschiebe nach mindestens einem der Ansprüche 4 bis 6,
**dadurch gekennzeichnet, daß** das Kopplungsmittel (22) als Gewindebolzen ausgebildet ist.

8. T-Geschiebe nach Anspruch 7,
**dadurch gekennzeichnet, daß** der Gewindebolzen (22) einen Kopf (22a) aufweist, der vom ersten Konus gebildet wird, und der zweite Konus als auf den Gewindebolzen (22) aufschraubbare Mutter (24) vorgesehen ist.

9. T-Geschiebe nach Anspruch 8,
**dadurch gekennzeichnet, daß** beide Konen als auf den Gewindebolzen aufschraubbare Muttern vorgesehen sind.

## Claims

1. A T-attachment for detachably fastening dental prostheses to one another or to remaining teeth, having a matrix (2) which has a cutout (4), a patrix (6) which has a fastening portion (8), which may be brought into engagement with a cutout (4) in the matrix (2), and a continuous slot (18) which extends at least through the fastening portion (8) and separates this into two parts (8a, 8b), and an expander (22, 24) which expands the two fastening portion parts (8a, 8b) and has a first expanding means which is arranged in the slot (18), is located in engagement with both fastening portion parts (8a, 8b) and is constructed as a first cone (22a) which is mounted in axially movable manner, the slot (18) having a widened first portion (20a) which corresponds substantially to the first cone (22a) and forms a conical cavity, and in which the first cone (22a) is arranged, **characterised in that** the expander (22, 24) has at least one second expanding means which is arranged at a spacing from the first expanding means (22a) in the slot (18) and is constructed as a second cone (24) which is mounted in axially movable manner, and the slot (18) has a widened second portion (20b) which corresponds substantially to the second cone (24) and forms a conical cavity, and in which the second cone (24) is arranged.

2. A T-attachment according to Claim 1, **characterised in that** the first cone (22a) is arranged in one end of the slot (18), and the second cone (24) is arranged in the other end of the slot (18).

3. A T-attachment according to Claim 1 or 2, **characterised in that** the cones (22a, 24) may be guided into the ends of the slot (18).

4. A T-attachment according to at least one of Claims 1 to 3, **characterised in that** the cones (22a, 24) point in mutually opposing directions and the expander (22, 24) has a coupling means (22), which effects a movement of the two cones (22a, 24) in mutually opposing directions.

5. A T-attachment according to at least one of Claims 1 to 4, **characterised in that** the cones (22a, 24) may be guided into the slot (18) by means of their narrow ends.

6. A T-attachment according to Claim 5, **characterised in that** at least one end of the slot (18) is widened to create a portion (20a, 20b) which corresponds substantially to a cone (22a, 24) and forms a conical cavity.

7. A T-attachment according to at least one of Claims 4 to 6, **characterised in that** the coupling means (22) is constructed as a threaded bolt.

8. A T-attachment according to Claim 7, **characterised in that** the threaded bolt (22) has a head (22a) which is formed by the first cone, and the second cone is provided as a nut (24) which may be screwed onto the threaded bolt (22).

9. A T-attachment according to Claim 8, **characterised in that** both cones are provided as nuts which may be screwed onto the threaded bolt.

## Revendications

1. Attache à glissière en T destinée à la fixation amovible de pièces détachées dentées l'une avec l'autre ou contre un mors restant, comprenant une matrice (2) qui comporte un évidement (4), un poinçon (6), qui comporte une zone de fixation (8) à faire entrer en prise avec un évidement (4) dans la matrice (2) et une fente débouchante (18), qui s'étend d'abord à travers la zone de fixation (8) et partage celle-ci en deux parties (8a, 8b), et un dispositif d'écartement (22, 24) qui écarte les deux parties de la zone de fixation (8a, 8b) et qui comporte un premier moyen d'écartement disposé dans la fente (18) et en prise avec les deux parties de la zone de fixation (8a, 8b), lequel est conçu en forme de premier cône (22a) logé de manière à pouvoir se déplacer dans le sens axial, la fente (18) étant munie d'une première partie (20a) formant une cavité conique correspondant au premier cône (22a), dans laquelle est disposé le premier cône (22a), **caractérisée en ce que** le dispositif d'écartement (22, 24) comporte au moins un deuxième moyen d'écartement disposé dans la fente (18) à une distance donnée du premier moyen d'écartement (22a), lequel est conçu sous forme de deuxième cône (24) logé de manière à pouvoir se déplacer dans le sens axial, et la fente (18) comporte une deuxième partie (20b) élargie et formant une cavité conique correspondant sensiblement au deuxième cône (24), dans laquelle est disposé le deuxième cône (24).

2. Attache à glissière en T selon la revendication 1, **caractérisée en ce que** le premier cône (22a) est disposé dans une extrémité de la fente (18) et le deuxième cône (24) est disposé dans l'autre extrémité de la fente (18).

3. Attache à glissière en T selon la revendication 1 ou 2, **caractérisée en ce que** les cônes (22a, 24) peuvent être insérés dans les extrémités de la fente (18).

4. Attache à glissière en T selon au moins l'une des revendications 1 à 3, **caractérisée en ce que** les cônes (22a, 24) sont disposés en opposition l'un par rapport à l'autre et le dispositif d'écartement (22, 24) comporte un moyen de couplage (22) qui provoque un mouvement des deux cônes (22a, 24) dans le sens opposé l'un par rapport à l'autre.

5. Attache à glissière en T selon au moins l'une des revendications 1 à 4, **caractérisée en ce que** les cônes (22a, 24) peuvent être insérés avec leur extrémité étroite dans la fente (18).

6. Attache à glissière en T selon la revendication 5, **caractérisée en ce qu'**au moins une extrémité de la fente (18) est élargie pour former une partie (20a, 20b) formant une cavité conique correspondant sensiblement à un cône (22a, 24).

7. Attache à glissière en T selon au moins l'une des revendications 4 à 6, **caractérisée en ce que** le moyen de couplage (22) est conçu sous forme de boulon fileté.

8. Attache à glissière en T selon la revendication 7, **caractérisée en ce que** le boulon fileté (22) comporte une tête (22a) qui est formée par le premier cône, et le deuxième cône est prévu sous forme d'écrou (24) à visser sur le boulon fileté (22).

9. Attache à glissière en T selon la revendication 8, **caractérisée en ce que** les deux cônes sont prévus sous forme d'écrous à visser sur le boulon fileté.
